# EUROPEAN PATENT SPECIFICATION

(11) **EP 2 492 091 B1**
(45) Date of publication and mention of the grant of the patent: **01.04.2015**
(21) Application number: 12155269.9
(22) Date of filing: 14.02.2012
(51) Int. Cl.: B32B 21/14, B32B 21/13, B32B 7/12, B32B 7/02, B32B 3/08, B27M 3/00

(54) **A process for working or realizing a wood manufacture with application of various wood types**
Verfahren zum Bearbeiten oder Herstellen eines Holzprodukts unter Verwendung verschiedener Holztypen
Procédé pour travailler ou réaliser une fabrication en bois avec application de divers types de bois

(30) Priority: 28.02.2011 IT MI20110298
(43) Date of publication of application: 29.08.2012
(73) Proprietor: De Luca, Denis, 22066 Mariano Comense (COMO) (IT)
(72) Inventor: De Luca, Denis, 22066 Mariano Comense (COMO) (IT)
(74) Representative: Parisi, Luigi

(56) References cited:
- WO-A1-01/21397
- GB-A- 427 500
- US-A- 5 439 749

## Description

The present invention relates to a process for working a wood manufacture with application of various wood types.

Structural beams made of laminated wood boards are made almost exclusively with wood types sourced from conifers, such as for example fir, Scots pine and others.

Other wood types, different from conifers, are not at present used to realise beams of a laminated type classified as structural.

It is also known that the use of solid wood beams causes grave problems of an ecological/environmental nature.

Also known are the problems of deterioration caused to the majority of wood types by atmospheric agents.

The aim of the present invention is to obviate the above-mentioned drawbacks, by means of a process for working wood boards which enables the structural advantages of the use of wood suitable for structural boards to be combined with the advantages deriving from a covering made of wood of different types, and in particular of valuable species.

A further aim of the invention is to create a bearing structure made of eco-compatible wood, sourced from cultivation cycles that are easily available and reproducible and a cladding realised using wood elements of precious origin, of slow growth, difficult to reproduce and not widely available. This is attained with a considerable economic and ecological saving.

A further aim of the invention is to attain the above result in a way which is practical and economical.

The aims are attained with a process for realising a wood manufacture, the process comprising:
- a step of bordering single planks of wood by application to said single planks of borders made of a material different from the wood of the single planks, in order to fashion bordered planks,
- a step of superposing a plurality of bordered planks, one bordered plank on another,
- a step of gluing the bordered planks to one another such as to create a group of bordered planks,
- a step of applying, by means of gluing, finishing planks made of a wood of a different species with respect to the species of the wood of the single planks, on an upper and lower surface of the group of the bordered planks, and
- a step of pressing the whole manufacture.

This realisation advantageously enables production of a manufacture, in particular a beam, made of wood suitable for structural boards having a cladding on all sides thereon made of a hard wood, which may even be different on the various sides, which is more expensive and applied such as to configure a continuous surface for masking or hiding the internal structure of the manufacture.

Moreover the fact of superposing a plurality of bordered planks provides for a manufacture of the desired thickness and having the desired structural properties.

In a further realisation of the invention, each of the bordered planks has borders which exhibit a different width and a step of gluing of the single bordered plants to one another is comprised, such that each of them is connected to one or more adjacent planks in which the borders superpose in an offset way.

This embodiment contributes to increase the sturdiness of the wood manufacture and the resistance to shear stress.

In still a further realisation of the invention, the material used for the borders of the manufacture is a wood of a different species and having a different density with respect to the density of the wood of the single planks.

An advantage of this embodiment is that it allows the finished manufacture to show an external structure that has a precious wood cover on all its external surface.

In a further realisation of the invention, it is used for the borders of the manufacture materials that are not wood.

An advantage of this embodiment is that it allows the finished manufacture, even if it is substantially composed of wood, to show borders of non-wood materials, for example for specific aesthetical purposes.

Finally, a step of impregnating the hard wood used for covering the external part of the manufacture with water-repellent substances and substances for preventing the porosity of the wood from being an element of infiltration and a permanent depositing of substances present in the air can be provided.

The invention comprises also a wood manufacture realized according to the various embodiments of the process described.

Further characteristics and advantages of the invention can be deduced from the dependent claims.

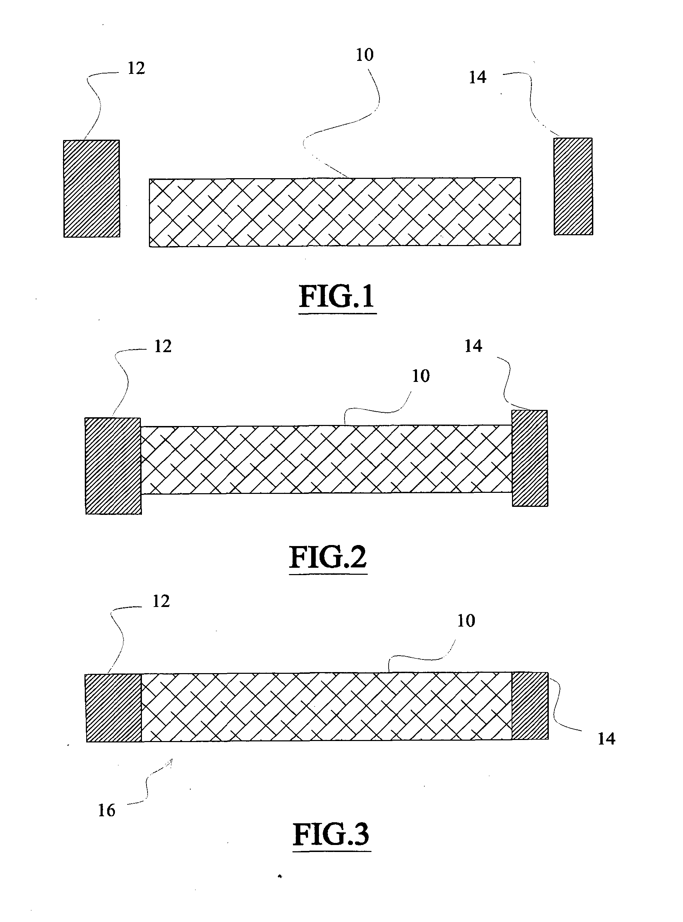

Further characteristics and advantages of the invention will emerge from a reading of the following description, provided by way of non-limiting example, with the aid of the figures illustrated in the accompanying drawings, in which: figure 1 is a section view of a first step of an example actuation of the process of the invention;
figures 2-4 are section views of further steps of the process of figure 1;
figure 5 is a section view of a manufacture made according to the process of figures 1-4;
figures 6-9 are section views of a different embodiment of the process of the invention; and
figure 10 is a section view of a manufacture realised according to the process of figures 6-9.
The figures illustrate a production cycle of a laminated wood manufacture, according to the process of the present invention.

Firstly a group of single planks 10, namely structural beams made of laminated wood boards, to make up the manufacture are squared along their lateral surfaces (figure 1).

Each single planks 10 is made of wood types sourced from conifers, for example silver fir, Norway Spruce, Scots pine and others. Each single planks 10 has therefore structural properties.

Then all the single planks 10 are bordered on their lateral surfaces, using borders 12,14 made of a wood of a different species and having a different density with respect to the density of the wood of the single planks 10.

In particular borders 12,14 may have different dimensions, in particular different widths.

It is specified that in the present embodiment for the realization of the borders 12,14 wood of a different species with respect to the density the wood of the single planks 10 and having a higher density may be used, such as wood of valuable species like oak, teak, fraxinus, hop hornbeam, chestnut and others. An exemplary table is to be considered:

**TABLE 1**

| DENSITY OR VOLUMIC MASS Kg/m³ (reference Giordano G. - Tecnologia del legno - UTET Torino 1983), (Norme UNI EN ISO 1007-1,2002) | |
|---|---|
| OAK | 760 Kg/m³ value referred to 15% humidity |
| FRAXINUS | 700 Kg/m³ value referred to 15% humidity |
| HOP HORNBEAM | 820 Kg/m³ value referred to 15% humidity |
| SILVER FIR | 440 Kg/m³ value referred to 15% humidity |
| NORWAY SPRUCE | 450 Kg/m³ value referred to 15% humidity |

In general therefore the borders 12,14 may be realized in wood of a different species and having a different density with respect to the density the wood of the single planks 10.

A bordering operation is the next step, for example using a bordering machine, reducing the height of the borders 12,14 up to equalling the height of the single plank 10 such as to obtain a bordered plank (figure 3).

The bordered plank 16 is then planed on the larger flat surface thereof.

A plurality of bordered planks 16 is thus prepared, following the above-described steps.

A finishing plank 18 is then realised, preferably of the same type of wood as the borders 12,14 applied on the bordered plank 16.

The finishing plank 18 preferably has a width which is equal to the width of the bordered plank 16 with two borders 12,14 applied.

The finishing plank 18 can be glued to a first bordered plank 16 and then the other bordered planks 16 are glued one on top of another up to a desired thickness.

For the final plank, a further finishing plank 19 is glued, on the opposite side with respect to the finishing plank 18, to realise a completed manufacture 20. In general therefore the finishing planks 18,19 may be realized in wood of a different species and having a different density with respect to the density the wood of the single planks 10. For example in oak, teak, fraxinus, hop hornbeam, chestnut and others.

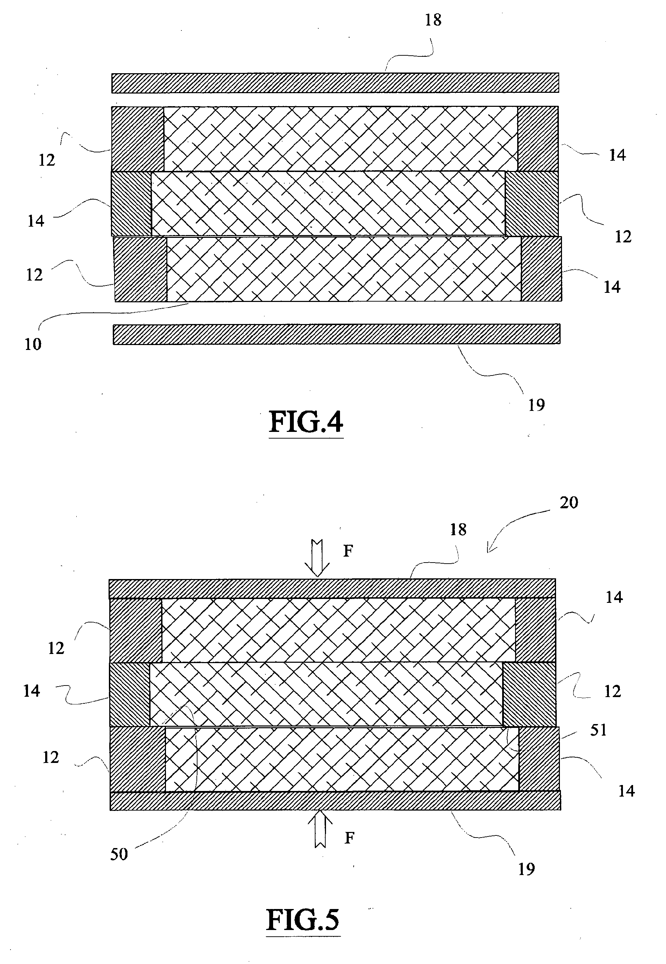

The thus-realised whole manufacture 20 is then subjected to a step of pressing (arrows F of figure 5).

To increase the sturdiness of the manufacture 20 it is preferable to glue the single bordered planks 16 such that each of them is connected to one or more adjacent bordered planks in which the borders 12,14 are superposed offset (figures 4 and 5).

In particular, in this arrangement surfaces 50,51 are created in which the wider border is glued partly to the less wide border and in part to the portion of laminated wood of the bordered plank 16.

Therefore borders 12,14 having different width are superposed in the gluing. Every bordered plank 16 has a first border 12 and a second border 14, in an opposite position with respect to the first border 12 and having a smaller width with respect to the width of the first border 12.

This arrangement leads to a better resistance to shear stress forces of the manufacture.

In a variant of the present invention, different types of wood of valuable species hard wood can be used for the different borders 12, 14 of the manufacture 20, or it is even possible to alternate borders made of wood of valuable species with borders made of other non-wood materials or use non-wood materials for the borders.

Non-wood materials used for the borders may be ferrous materials, aluminum, polycarbonate or plastics.

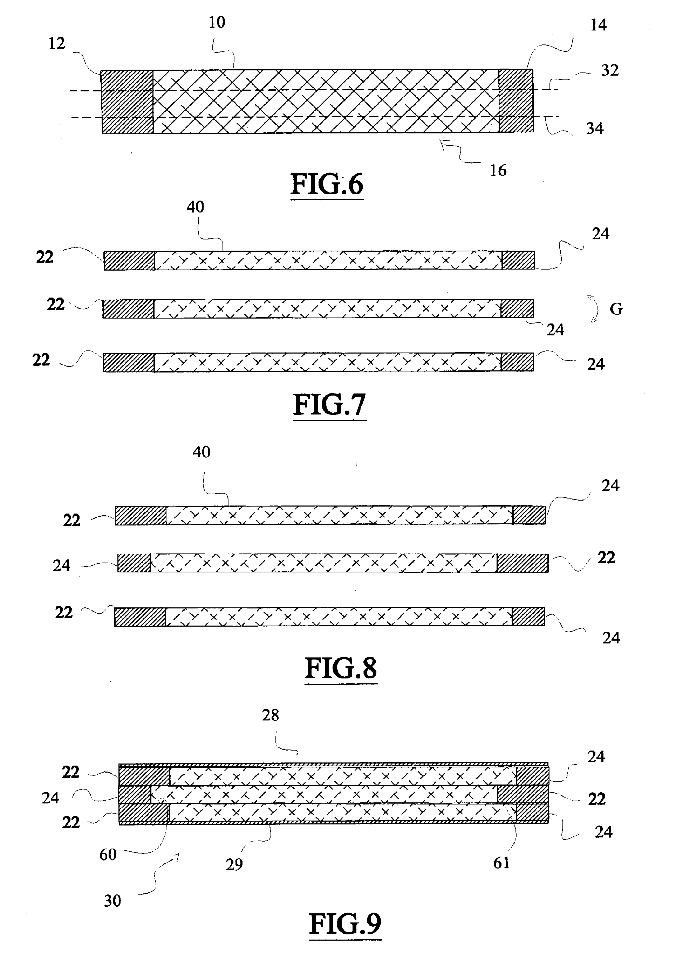

In an alternative embodiment of the present invention, it is possible to start with a bordered plank 16 and proceed to longitudinally cutting the plank 16 according to various cutting lines 32, 34 such as to fashion a plurality of slim bordered planks 40, each of which is preferably provided with a wider border 22 and a narrower border, both made of a wood having a different density with respect to the density of the wood of the single planks 10. Subsequently a part of the slim bordered planks 40 are rotated by 180° (in the embodiment of figures 6-9 the central plank according to arrow G) such that the adjacent slim planks can be superposed with the borders 22, 24 superposed offset (figures 8, 9).

In particular, with this arrangement surfaces 60, 61 are created in which the wider border is partly glued to the less wide border and in part to the portion of structural wood of the corresponding slim bordered plank 40.

In this case too, the offset superposing of the borders 22,24 increases the resistance of the manufacture 30, including in relation to the shear stresses thereon.

Finishing planks 28, 29 made of wood having a different density with respect to the density of the wood of the single planks 10 are glued above and below these planks, such as to realise a complete manufacture 30.

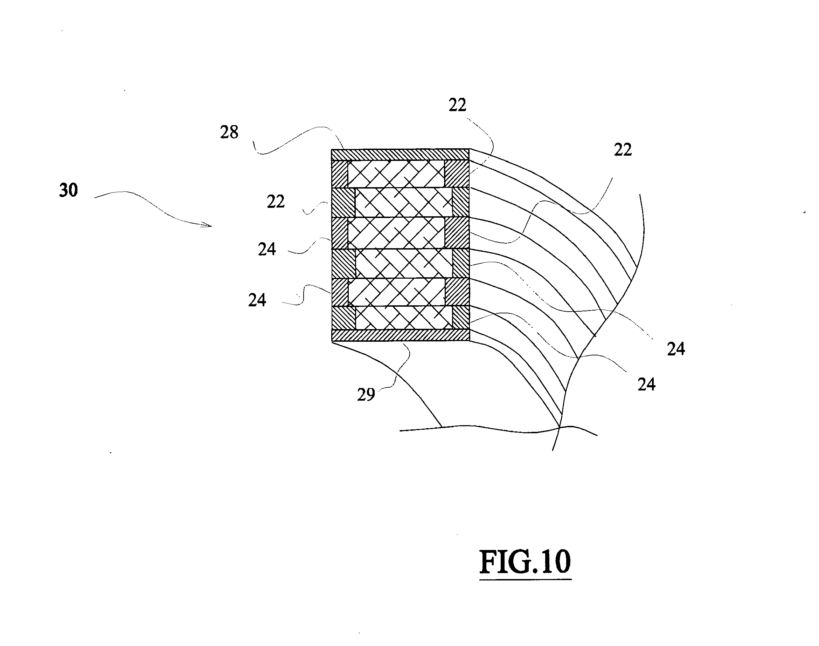

Finally the whole manufacture 30 thus realised is subject to a step of pressing. It is specified that with this pressing step both straight and curved (see figure 10) structures can be obtained, with the use of profiled matrices. In general it can be stated that the shape of the beam can be linear or curved either in an arc of a circle or asymmetrically.

Lastly the external hard wood surfaces are planed such as to obtain the finished manufacture in the required size.

The wood used for cladding the external part of the laminated manufacture can then be impregnated with new-generation substances such as to make them water-repellent, as well as having a surface that is capable or preventing the porosity of the wood from becoming an element susceptible to infiltration and permanent depositing of the substances present in the air. With the use of these substances the surface is washed by simple rain water and in more difficult cases by a simple cleaning action using a cloth.

Further, the beneficial effect for the environment, i.e. the duration of the manufacture, is also given by the possibility of applying innovative material for protection against corrosion.

In the case of positioning the beams internally of a building it is not necessary to apply protection material against environmental corrosion and the water-repellent.

The manufacture so realized can be classified as structural wood, according to the standards in existence in relation to these functions.

In a variant of the invention the described process can also be applied to structures classified as non-structural.

The addition and/or application of wood of valuable species on the external surfaces does not lead to any recalculation of the bearing rating of the beam itself.

It is indeed specified that the widths of the wood used for cladding are not in any way retained to be elements that are such as to determine a variation in the load-bearing rating of the beam.

Obviously modifications or improvements dictated by contingent or particular motivations can be brought to the invention as described, without its forsaking the ambit of the invention as claimed herein below.

## Claims

1. A process for realising a wood manufacture (20), the process comprising:
- a step of bordering single planks (10) of wood by application to said single planks (10) of borders (12, 14) made of a material different from the wood of the single planks (10), in order to fashion bordered planks (16),
- a step of superposing a plurality of bordered planks (16), one bordered plank (16) on another,
- a step of gluing the bordered planks (16) to one another such as to create a group of bordered planks (16),
- a step of applying, by means of gluing, finishing planks (18,19) made of a wood of a different species with respect to the species of the wood of the single planks (10), on an upper and lower surface of the group of the bordered planks (16), and
- a step of pressing the whole manufacture (20).

2. The process of claim 1, comprising, for each of the bordered planks (16), a use of borders (12, 14) which exhibit different widths / and a step of gluing the single bordered planks (16) to one another such that each thereof is connected to a plank or several adjacent bordered planks (16) in which the borders (12,14) are superposed offset to one another.

3. The process of claim 1, in which the material used for the borders (12,14) of the manufacture (20) is a wood of a different species with respect to the species of the wood of the single planks.

4. The process of claim 1, in which it is used for the borders (12,14) of the manufacture (20) materials that are not wood.

5. The process of claim 1, wherein the wood used for realizing the borders and the finishing planks is chosen from oak, teak, fraxinus, hop hornbeam or chestnut.

6. A wood manufacture (20,30) realised according to the process of the preceding claims, wherein the manufacture (20,30) comprises a plurality of single planks (10) of wood and wherein to each of the single planks (10) borders (12,14) are applied and finishing planks (18,19) are glued on the upper and lower surfaces of the plurality of bordered planks (16), the borders (12,14) being made of a material different from the wood of the single planks (10), and the finishing planks (18,19) being made of a wood of a different species with respect to the species of the plurality of single planks (10).

## Patentansprüche

1. Verfahren zur Herstellung eines Holzproduktes (20), wobei das Verfahren umfasst:
- ein Schritt des Einfassens einzelner Bretter (10) aus Holz durch Auftragen von Begrenzungen (12, 14) auf die einzelnen Bretter (10), wobei die Begrenzungen aus einem anderen Material als dem Holz der einzelnen Bretter (10) hergestellt sind, um eingefasste Bretter (16) herzustellen,
- ein Schritt des Übereinanderlegens einer Vielzahl von eingefassten Brettern (16), wobei ein eingefasstes Brett (16) auf einem anderen liegt,
- ein Schritt des Verklebens der eingefassten Bretter (16) miteinander, um eine Gruppe von eingefassten Brettern (16) herzustellen,
- ein Schritt des Auftragens, mittels Verklebens, von gefertigten Brettern (18, 19), die aus einem Holz hergestellt sind, welches von einer anderen Art in Bezug auf die Art des Holzes der einzelnen Bretter (10) ist, auf eine obere und eine untere Fläche der Gruppe von eingefassten Brettern (16), und
- ein Schritt des Verpressens des gesamten Produktes (20).

2. Verfahren nach Anspruch 1, umfassend, für jedes der eingefassten Bretter (16), eine Verwendung von Begrenzungen (12,14), die unterschiedliche Breiten aufweisen, und einen Schritt des Verklebens der einzelnen eingefassten Bretter (16) miteinander, so dass jedes davon mit einem Brett oder mehreren benachbarten eingefassten Brettern (16) verbunden ist, wobei die Begrenzungen (12,14) versetzt zueinander überlagert sind.

3. Verfahren nach Anspruch 1, wobei das für die Begrenzungen (12,14) verwendete Material des Produktes (20) ein Holz ist, welches von einer anderen Art in Bezug auf die Art des Holzes der einzelnen Bretter ist.

4. Verfahren nach Anspruch 1, wobei für die Begrenzungen (12, 14) des Produktes (20) Materialien verwendet werden, die nicht Holz sind.

5. Verfahren nach Anspruch 1, wobei das für die Herstellung der Begrenzungen und der gefertigten Bretter verwendete Holz aus Eichen-, Teak-, Eschen-, gemeine Hopfenbuchen- oder Kastanienholz ausgewählt ist.

6. Ein Holzprodukt (20,30), hergestellt nach dem Verfahren gemäß einem der vorherigen Ansprüche, wobei die Herstellung (20,30) eine Vielzahl einzelner Bretter (10) aus Holz umfasst und wobei auf jedes der einzelnen Bretter (10) Begrenzungen (12,14) aufgebracht werden und gefertigte Bretter (18,19) auf die oberen und unteren Flächen der Vielzahl von eingefassten Bretter (16) geklebt werden, wobei die Begrenzungen (12,14) aus einem Material hergestellt sind, welches vom Holz der einzelnen Bretter (10) verschieden ist und die gefertigten Bretter (18,19) aus einem Holz hergestellt sind, welches von der Art der Vielzahl einzelner Bretter (10) verschieden ist.

## Revendications

1. Procédé pour réaliser une construction en bois (20), le procédé comprenant:
- une étape de bordure planches unitaires (10) de bois par application à ladite planches unitaires (10) des bordures (12, 14) faite d'un matériau différent du bois des planches unitaires (10), afin de obtenir planches bordées (16),
- une étape de superposition d'une pluralité de planches bordés (16), une planche bordée (16) sur l'autre,
- une étape de collage des planches bordées (16) les uns aux autres de manière à créer un groupe de planches bordées (16),
- une étape d'application, au moyen de collage, des planches de finition (18,19) constitués d'un bois d'une espèce différente à l'égard de l'espèce du bois des planches unitaires (10), sur une surface supérieure et inférieure de le groupe des planches bordées (16), et
- une étape de pressage de l'ensemble de construction (20).

2. Procédé selon la revendication 1, comprenant, pour chacune des planches bordées (16), une utilisation des bordures (12,14) qui présentent des largeurs différentes et une étape de collage des planches bordées unitaires (16) les uns aux autres de telle sorte que chacun de ceux-ci est reliée à une planche ou plusieurs planches avec bordures adjacentes (16) dans laquelle les bords (12,14) sont superposées, décalées les unes aux autres.

3. Procédé selon la revendication 1, dans lequel le matériau utilisé pour les bordures (12,14) de la construction (20) est un bois d'une espèce différente à l'égard de l'espèce du bois des planches unitaires.

4. Procédé selon la revendication 1, dans lequel il est utilisé pour les bordures (12,14) de la construction (20) qui ne sont pas des matériaux en bois.

5. Procédé selon la revendication 1, dans lequel le bois utilisé pour la réalisation des planches bordées et des planches de finition peut être choisi parmi le chêne, le tek, le cendre, le charme hop ou le châtaignier.

6. Construction en bois (20,30) réalisé selon le procédé des revendications précédentes, dans lequel la construction (20,30) comprend une pluralité de planches unitaires (10) en bois et dans lequel à chacune des planches unitaires (10) sont appliqués des bordures (12,14) et des planches de finition (18,19) sont collés sur les surfaces supérieure et inférieure de la pluralité de planches bordées (16), les bordures (12,14) étant réalisés en un matériau différent de la bois des planches unitaires (10), et les planches de finition (18,19) étant réalisés en bois d'une espèce différente à l'égard de l'espèce de la pluralité de planches unitaires (10).
